# EUROPÄISCHE PATENTANMELDUNG

(11) **EP 1 118 781 A1**
(43) Veröffentlichungstag der Anmeldung: **25.07.2001**
(21) Anmeldenummer: 00127913.2
(22) Anmeldetag: 20.12.2000
(51) Int. Cl.: F16C 9/04

(54) **Pleuellagerung**

(30) Priorität: 19.01.2000 DE 10001993
(71) Anmelder: Volkswagen Aktiengesellschaft, 38436 Wolfsburg (DE)
(72) Erfinder: Jentsch, Ralf, 38100 Braunschweig (DE)

(57) **Zusammenfassung**

Eine Pleuellagerung zur Lagerung mindestens eines Pleuels (5) an einem Hubzapfen (4) einer Kurbelwelle einer Hubkolbenmaschine hat Axialführungsmittel zur axialen Führung des Pleuels auf der Kurbelwelle. Erfindungsgemäß weisen die Axialführungsmittel mindestens ein im wesentlichen gleitreibungsfreies Axiallager auf. Dieses kann insbesondere als Wälzlager, insbesondere als Kugellager (21, 22), oder als ein hydrodynamisches Lager ausgebildet sein.

## Beschreibung

Die Erfindung betrifft eine Pleuellagerung zur Lagerung mindestens eines Pleuels im Bereich eines Hubzapfens einer Kurbelwelle einer Hubkolbenmaschine gemäß dem Oberbegriff von Anspruch 1.

Pleuellagerungen dieser Art umfassen Axialführungsmittel zur axialen Führung des Pleuels. Diese Axialführungsmittel sollen dazu dienen, eine Axialverschiebung des Pleuels auf dem Hubzapfen, auf dem es drehbar gelagert ist, zu begrenzen bzw. weitgehend zu verhindern.

Bekanntlich sind zur axialen Führung der Pleuel von Hubkolbenmaschinen häufig an den großen Pleuelaugen an deren axialen Stirnflächen fein bearbeitete Anlaufflächen vorgesehen, die mit an den Kurbelwellenwangen angeordneten Anlaufbunden unter Aufbau von Gleitreibung zusammenwirken. Sind zwei Pleuel auf einem Hubzapfen, oder auf zwei geringfügig gegeneinander versetzten Hubzapfen, angeordnet, so wirken einander benachbarte Anlaufflächen der Pleuel unmittelbar aneinander abgleitend zusammen.

Zur Verminderung von Reibung und Verschleiß im Bereich der zur Axialführung zusammenwirkenden Flächen ist in der Schrift DE 40 15 536 C1 schon vorgeschlagen worden, die Anlaufflächen eines Pleuels bzw. aller Pleuel im geringen Maß ballig zu gestalten, wodurch bei Fluchtungsfehlern schädliche Verkantungen mit ggf. auftretendem Verschleiß entgegengewirkt werden soll. Zur Verbesserung der Verschleißbeständigkeit der Anlaufflächen können diese gemäß diesem Vorschlag durch Glattwalzbehandlung einerseits geglättet und andererseits kalt gehärtet werden.

Der Erfindung liegt die Aufgabe zugrunde, eine Pleuellagerung der gattungsgemäßen Art vorzuschlagen, die eine zuverlässige axiale Führung bei einem Minimum an Reibungsverlusten ermöglicht.

Zur Lösung dieser Aufgabe schlägt die Erfindung eine Pleuellagerung mit den Merkmalen von Anspruch 1 vor. Bevorzugte Weiterbildungen sind in den abhängigen Ansprüchen angegeben. Der Wortlaut sämtlicher Ansprüche wird durch Bezugnahme zum Inhalt der Beschreibung gemacht.

Die erfindungsgemäßen Pleuellagerungen zeichnen sich dadurch aus, daß die Axialführungsmittel mindestens ein im wesentlichen gleitreibungsfreies Axiallager umfassen. Dieses ist so ausgelegt, daß Festkörpergleitreibung im Bereich des Axiallagers zuverlässig vermieden wird. Dadurch kann erreicht werden, daß Reibungsverluste im Bereich der zur Axialführung zusammenwirkenden Elementen auf ein Minimum herabgesetzt werden. Erfindungsgemäß ist dies vor allem auf zwei unterschiedliche Weisen möglich, die bei einer Hubkolbenmaschine alternativ oder gemeinsam vorgesehen sein können. Durch Verwendung von Wälzlagern zur Axialführung der Pleuel kann die herkömmlich vorhandene gleitende Festkörperreibung durch eine viel geringere rollende Reibung ersetzt werden. Durch Bereitstellung von hydrodynamischen Lagern zur Axialführung der Pleuel kann Festkörperkontakt im Axiallagerbereich vollständig vermieden werden, so daß im wesentlichen nur die innere Reibung der verwendeten Schmierstoffe zu überwinden ist. Zwischen diesen Lagerungsprinzipien kann je nach Anwendung gewählt werden. Sie können kombiniert werden. Eine Wälzlagerung kann z.B. bevorzugt sein, wenn vor allem geringe Wärmeentwicklung und geringer Ölverbrauch angestrebt werden und/oder wenn eine in Axialrichtung weitgehend starre Führung gewünscht ist. Eine hydrodynamische Lagerung kann dagegen bevorzugt sein, wenn eine in Axialrichtung elastischere Führung erwünscht ist.

Wie erwähnt, zeichnet sich eine Weiterbildung dadurch aus, daß die Axialführungsmittel mindestens ein Wälzlager umfassen. Durch die Bereitstellung eines Wälzlagers z.B. zwischen einem Pleuel und einer angrenzenden Kurbelwange oder zwischen zwei direkt benachbarten Pleueln wird in diesem Bereich praktisch nur Rollreibung erzeugt. Der bei herkömmlichen Axialführungsmitteln sehr schmale Schmierspalt zwischen den im Betrieb der Hubkolbenmaschine sich gegeneinander verdrehenden Elementen kann vergrößert werden. Während bei herkömmlichen Lösungen mit aufeinander abgleitenden Flächen der Schmierspalt im Bereich des Berührungskontaktes praktisch verschwindet und im angrenzenden Bereich in der Regel weniger als ca. 50 µm beträgt, kann bei Pleuellagerungen mit Wälzkörpern die Breite eines Schmierspaltes durch einen gewissen Überstand der Wälzkörper über eine Bezugsfläche des wälzkörpertragenden Elementes auf einen geeigneten größeren Wert eingestellt werden, der z.B. in der Größenordnung von ca. 100 µm bis ca. 200 µm liegen kann. Während bei herkömmlichen Pleuellagerungen Schmieröl durch einen engen Schmierspalt gepreßt werden muß, kann bei erfindungsgemäßen Pleuellagern mit Wälzlager die Schmierung im Bereich axial benachbarter, gegeneinander verdrehbarer Elemente durch Vergrößerung des Schmierspaltes unter Aufrechterhaltung einer präzisen Axialführung deutlich erleichtert werden. Leistungsverluste aufgrund der beschriebenen Schwierigkeiten bei der Schmierung lassen sich durch Wälzkörper-Pleuellagerung deutlich reduzieren. Die Vorteile kommen insbesondere bei Vielzylinder-Hubkolbenmaschinen mit einer entsprechenden Vielzahl derartiger Schmierstellen zum Tragen. Insbesondere können auch die Kaltstarteigenschaften deutlich verbessert werden.

Bei einer bevorzugten Ausführungsform ist vorgesehen, daß das Wälzlager als reines Axiallager ausgebildet ist. Dadurch kann das Wälzlager besonders einfach und kostengünstig hergestellt werden. Kräfte, die in Radialrichtung, also quer zur Erstreckung des Hubzapfens auftreten, können durch die normalerweise als Gleitlager ausgebildete Lagerung des Pleuelauges auf dem Hubzapfen aufgenommen werden. Ein reines AxialWälzlager ermöglicht zudem ein ggf. erwünschtes Pleuelspiel in Radialrichtung.

Bei bevorzugten Ausführungsformen ist vorgesehen, daß das Wälzlager als Kugellager ausgebildet ist. Dadurch kann ein zuverlässiger, reibungsarmer Betrieb auch bei hohen Drehzahlen sichergestellt werden. Die Auslegung des Wälzlagers der Axialführungsmittel als Kugellager berücksichtigt, daß die üblicherweise in Axialrichtung auftretenden Kräfte relativ klein sind, so daß die Vorteile, die sich durch den punktförmigen Kontakt zwischen den Wälzkörpern und der Abrollfläche bzw. Laufbahn im Hinblick auf die Rollreibung ergeben, die möglicherweise existierenden Nachteile hinsichtlich axialer Belastbarkeit überwiegen. Ein Wälzlager einer erfindungsgemäßen Pleuellagerung kann jedoch auch als Rollenlager ausgebildet sein. Da bei diesen zwischen den beispielsweise zylindrischen Wälzkörpern und der zugeordneten Abrollfläche ein Linienkontakt besteht, kann bei derartigen Lösungen die Zahl der Wälzkörper im Vergleich zu Kugellagern geringer sein, was herstellungstechnische Vorteile bieten kann.
Dabei sind neben Kugeln und zylindrischen Rollen alternativ auch sämtliche andere Formen von Wälzkörpern, wie z.B. tonnenförmige Rollen möglich.

Die Erfindung läßt hinsichtlich der Gestaltung des Wälzlagers viele konstruktive Freiheiten zu. Bei einer bevorzugten Ausführungsform ist vorgesehen, daß ein Pleuel ein großes Pleuelauge mit axialen Stirnflächen aufweist und daß an mindestens einer der axialen Stirnflächen Wälzkörper des Wälzlagers angeordnet sind, beispielsweise in einer konzentrisch zur Drehachse des Pleuelauges angeordneten, ringförmigen Anordnung. Die beweglichen Elemente des Wälzlagers können somit bei der Herstellung des Pleuels in dieses eingebaut werden. Die zugeordnete Abrollfläche oder Laufbahn für die Wälzkörper kann dann beispielsweise an einer axialen Stirnseite einer Kurbelwange der Kurbelwelle oder, für Anordnungen mit mehreren benachbarten Pleueln im Bereich eines Hubzapfens, an einem großen Pleuelauge eines benachbarten Pleuels vorgesehen sein. Es ist grundsätzlich jedoch auch möglich, daß die Wälzkörper erfindungsgemäßer Wälzlager in umgekehrter Weise im Bereich der Kurbelwangen der Kurbelwelle angeordnet sind.

Im Hinblick auf dauerhaft gute Laufeigenschaften und geringen Rollwiderstand ist bei bevorzugten Ausführungsformen vorgesehen, daß das Wälzlager eine den Wälzkörpern zugeordnete Abrollfläche bzw. Laufbahn für die Wälzkörper aufweist, die durch geeignete Behandlung gehärtet ist. Zur Härtung kann beispielsweise mittels Lasertechnik das Werkstoffgefüge im Bereich der Laufbahn lokal gehärtet werden oder es kann eine den Abrollbereich umfassende Induktionshärtung durchgeführt werden. Alternativ kann eine Abrollfläche auch an einem gesonderten Lagerelement aus einem gehärteten oder harten Werkstoff ausgebildet sein, z.B aus Hartmetall oder Keramik.

In vielen Fällen, vor allem im Bereich der Kraftfahrzeugindustrie, werden Kurbelwellen einteilig aus einem Guß oder geschmiedet hergestellt. Zugehörige Pleuel sind dann bekanntlich im Bereich des großen Pleuelauges geteilt ausgeführt, wobei ein mit dem Pleuelschaft verbundener Pleuelfuß und ein mit diesem verschraubbarer Pleueldeckel gemeinsam das große Pleuelauge bilden. Insbesondere bei derartigen Pleueln ist es vorteilhaft, wenn das Wälzlager Wälzkörper aufweist, die direkt in einer am Pleuel im Bereich des großen Pleuelauges ausgebildeten Aufnahmeöffnung angeordnet sind. Durch diese Integration der Wälzkörper in den Pleuelfußbereich der Pleuelstange und den Pleueldekkel bzw. Lagerdeckel wird die Teilung der Pleuelstange nicht behindert. Es ist auch möglich, Wälzkörper des Wälzlagers in einem gesonderten Wälzkörperträger oder Käfig unterzubringen und diesen in eine entsprechend geformte Aufnahmeöffnung am Pleuelkopf einzubauen. Der Wälzkörperkäfig kann bei ungeteilten Pleuelaugen geschlossen ringförmig sein.

Wenn Wälzkörper unmittelbar in eine formangepaßte Aufnahmeöffnung an der Stirnseite eines Pleuelkopfes (oder einer Kurbelwange) anzubringen sind, ist es zweckmäßig, den Wälzkörper nach Einlegen gegen Herausfallen aus der Aufnahmeöffnung zu sichern. Dies kann bei einer besonders zweckmäßigen Ausführung durch Verstemmen der Randbereiche der Aufnahmeöffnung erfolgen, wodurch nach Einlegen des Wälzkörpers der Eingangsbereich der Ausnahmeöffnung so weit verkleinert wird, daß der Wälzkörper durch das ihn unmittelbar umgebende Material des Pleuelkopfes (oder der Kurbelwange) gegen Herausfallen gesichert ist.

Bei einer Weiterbildung ist vorgesehen, daß das Wälzlager Wälzkörper aufweist, die in Axialrichtung federbelastet sind. Dadurch können Wärmeausdehnungseffekte kompensiert werden und es kann ein zuverlässiger, andauernder Abrollkontakt zwischen Wälzkörper und zugeordneter Abrollfläche bei allen Betriebstemperaturen sichergestellt werden. Die Präzision der axialen Führung ist dann bei allen Betriebstemperaturen gleichermaßen hoch. Die axiale Federbelastung kann auf einzelne Wälzkörper oder Gruppen von Wälzkörpern oder auch ggf. auf einen mehrere Wälzkörper tragenden Wälzkörperträger wirken. Es ist auch möglich, daß ein beispielsweise an einer Kurbelwange angebrachtes Lagerelement, an dem die Abrollfläche ausgebildet ist, derart federbelastet ist, daß auch bei geringfügig variierendem Axialabstand zwischen Pleuel und Kurbelwange ein dauernder Abrollkontakt der Wälzlagerelemente sichergestellt ist.

Zur Bereitstellung der eingangs erwähnten hydrodynamischen Axiallagerung für Pleuel kann auf bewegliche Elemente, wie Wälzkörper, verzichtet werden. Es kann eine geeignete Formgebung der axial benachbarten Stirnseite von Pleuelköpfen und/oder Kurbelwangen ausreichen, um eine gezielte Einleitung von Schmierstoff in diesen Bereich und einen Aufbau eines stabilen Schmierpolsters zwischen gegeneinander verdrehbaren Elementen im Lagerbereich zu gewährleisten. So kann beispielsweise vorgesehen sein, daß mindestens eine Stirnfläche eines Pleuels zur Bildung eines hydrodynamischen Axiallagers z.B. durch geeignete Strukturierung der Stirnseite besonders angepaßt ist. Hierzu kann eine vorzugsweise im wesentlichen ebene Stirnfläche eine oder mehrere Vertiefungen oder Taschen zur Aufnahme und Führung von Schmierstoff aufweisen. Alternativ oder zusätzlich kann auch eine Kurbelwangenstirnseite entsprechend angepaßt sein und derartige Vertiefungen aufweisen. Die matreialabtragende Einarbeitung von Schmierstoffführungstaschen und/oder -kanälen in Pleuelstirnseiten ist aufgrund der einfacheren Herstellung (Werkzeugauslauf) bevorzugt.

Je nach Art der Taschen kann der Schmiermittelfluß im Bereich des hydrodynamischen Lagers gesteuert werden. So ist es möglich, daß Vertiefungen mindestens abschnittsweise bezogen auf die Drehachse des Pleuels strahlförmig verlaufen, also mehr oder weniger gerade in Radialrichtung. Es ist auch möglich, daß Vertiefungen spiralförmig verlaufen, so daß sie in Umlaufrichtung bzw. in Umfangsrichtung der mit Vertiefungen versehenen Fläche gekrümmt sind. Zweckmäßig sind die Vertiefungen durch eine in Umfangsrichtung variierende axiale Tiefe rampenartig ausgebildet, wobei die Ausrichtung der Rampe zweckmäßig so ist, daß die Vertiefung in einem Einleitungsbereich für Schmierstoff tiefer ist und sich zum Ausleitungsbereich hin verflacht. Vom Ausleitungsbereich wird der Schmierstoff in den Schmierspalt gepreßt.

Zur Versorgung der hydrodynamischen Axiallagerung mit Schmierstoff müssen bei geeigneter Formgestaltung keine gesonderten Maßnahmen vorgenommen werden. Üblicherweise führen zur Schmierung der Radial-Gleitlager der Pleuel vom Hauptlager der Kurbelwelle zum Pleuellager diagonale Ölführungsbohrungen durch die Kurbelwelle. Das Öl tritt zwischen Hubzapfen und Lagerschale des Pleuellagers aus und strömt anschließend stirnseitig am Pleuellager aus. Von dort kann es sich unter Erzeugung der hydrodynamischen Lagerung ins Freie quetschen. Zur Unterstützung dieser Ölführung können im Bereich der hydrodynamischen Lagerung gesonderte Freistiche am Übergangsbereich zwischen Hubzapfen und Kurbelwellenwange vorgesehen sein. Im Rahmen der Erfindung ist es also möglich, durch wenige geeignete, vorwiegend materialabtragende Bearbeitungsschritte an herkömmlichen Pleueln und/oder Kurbelwellen eine hydrodynamische Lagerung zur Axialführung der Pleuel bereitzustellen.

Durch den Einbau von Pleueln mit Wälzkörpern und/oder Abrollflächen für die beschriebene, Wälzlager-Pleuellagerung oder mit besonders gestalteten axialen Stirnflächen zur Bildung von hydrodynamischen Axial-Lagerungen lassen sich Hubkolbenmaschinen der genannten Art auf einfache Weise beispielsweise im Hinblick auf Kaltstarteigenschaften und reibungsbedingte Leistungsminderungen verbessern. Entsprechendes gilt für den Einbau von Kurbelwellen, die besonders zur Bildung von erfindungsgemäßen Axialwälzlagern oder hydrodynamischen Axiallagern angepaßt sind. Eine derartige Kurbelwelle kann beispielsweise als Axialbegrenzung von Hubzapfen dienende Kurbelwangen haben, an denen als Abrollfläche für Wälzkörper eines Wälzlagers ein vorzugsweise gehärteter Abrollbereich vorgesehen ist oder eine zur Bildung eines hydrodynamischen Pleuelaxiallagers besonders gestaltete Stirnseite. Ggf. kann eine Kurbelwelle auch Wälzkörper des Wälzlagers tragen. Die Erfindung erfaßt auch mit erfindungsgemäßen Pleuel-Axiallagerungen ausgestaltete Hubkolbenmaschinen, bei denen sich die Vorteile der Erfindung beispielsweise durch geringeren Kraftstoffverbrauch und/oder Verbesserung von Kaltstarteigenschaften zeigen.

Die beschriebenen Merkmale und weitere Merkmale der Erfindung ergeben sich aus der nachfolgenden Beschreibung bevorzugter Ausführungsformen in Verbindung mit den abhängigen Ansprüchen und den Zeichnungen. Hierbei können die einzelnen Merkmale jeweils für sich oder zu mehreren in Kombination miteinander verwirklicht sein und vorteilhafte Ausführungsformen darstellen. Es zeigen:
- Fig. 1: eine Ausführungsform einer Pleuellagerung eines im Längsschnitt gezeigten Pleuels auf einem Hubzapfen einer Kurbelwelle einer Hubkolbenmaschine mit Axial-Kugellagern zur axialen Führung des Pleuels an den Kurbelwangen der Kurbelwelle;
- Fig. 2: eine Detailansicht des in Fig. 1 eingekreisten Bereichs II zur Erläuterung des Aufbaus des Axial-Kugellagers;
- Fig. 3: eine der Fig. 2 entsprechende Detailansicht einer anderen Ausführungsform eines Axial-Kugellagers;
- Fig. 4: einen Wälzlagerbereich einer anderen Ausführungsform, bei der ein Wälzlagerkäfig in einen hubzapfennahen Einstich am das große Pleuelauge aufnehmenden Pleuelteil des Pleuels eingesetzt ist;
- Fig. 5: eine Perspektivansicht einer axiale Stirnseite des Pleuelteils eines zur Bildung einer erfindungsgemäßen Pleuellagerung ausgestalteten Pleuels mit im Pleuel integrierten Wälzkugeln,
- Fig. 6: eine Pleuellagerung zweier unmittelbar benachbarter Pleuel auf einem gemeinsamen Hubzapfen einer Kurbelwelle einer Hubkolbenmaschine,
- Fig. 7: eine Ausführungsform einer hydrodynamischen Pleuel-Axiallagerung eines im Längsschnitt gezeigten Pleuels auf einem Hubzapfen einer Kurbelwelle einer Hubkolbenmaschine, wobei die dem Hubzapfen zugewandten axialen Stirnseiten der Kurbelwangen zur Erzeugung einer hydrodynamischen Lagerung mit Vertiefungen versehen sind,
- Fig. 8: eine schematische Darstellung einer axialen Ansicht der Stirnseite eines Pleuels oder einer Kurbelwellenwange zur Erläuterung unterschiedlicher Formen von Schmierstofführungstaschen und
- Fig. 9: einen in Umfangsrichtung einer axialen Stirnseite verlaufenden Schnitt durch eine Schmierstoffführungsvertiefung zur Erläuterung der rampenartigen Struktur der Vertiefung.

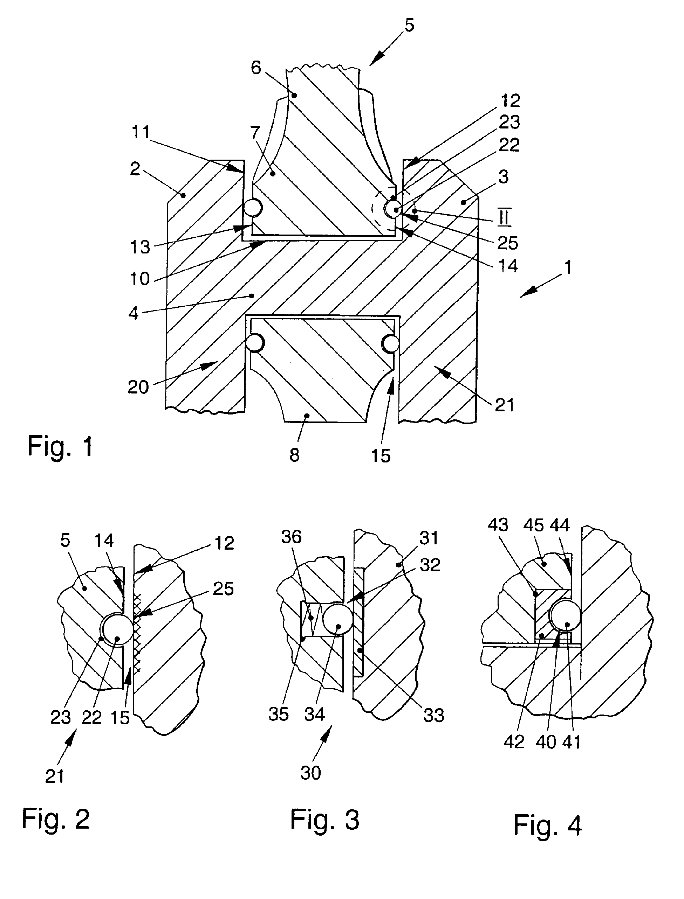

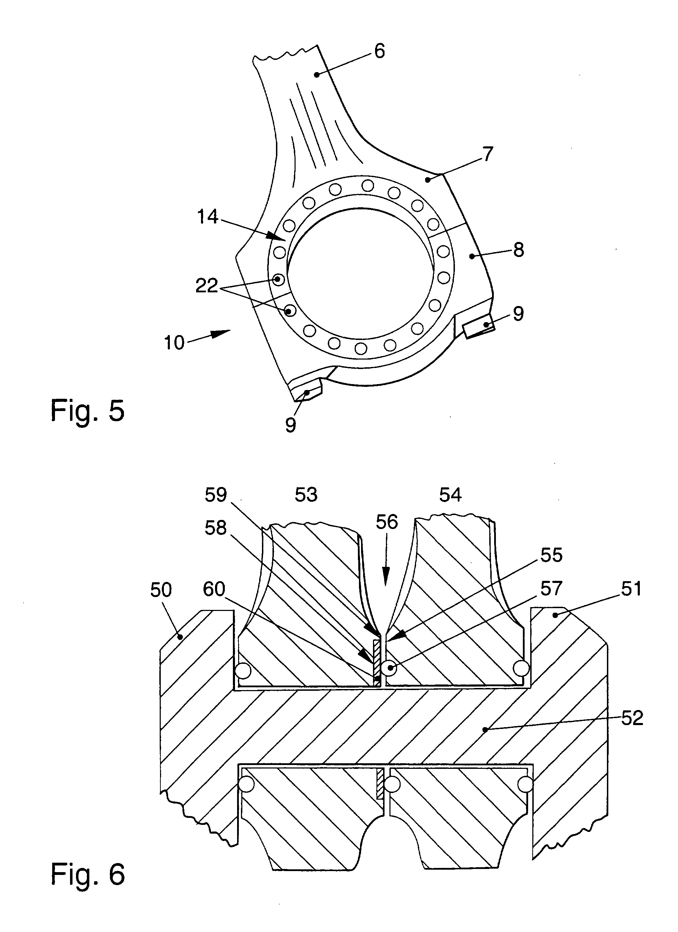

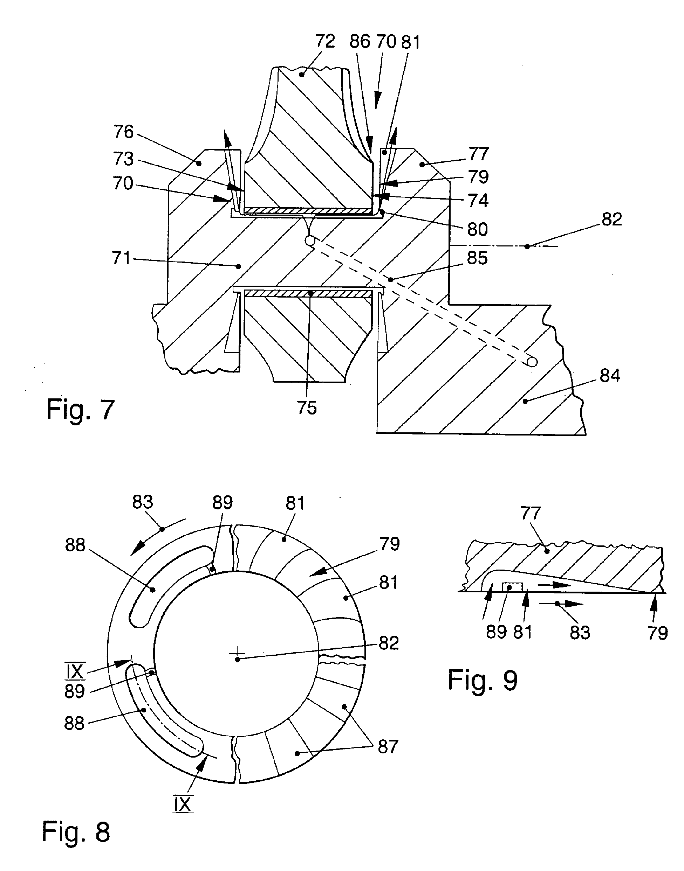

In Fig. 1 ist schematisch ein axialer Abschnitt einer Kurbelwelle 1 einer Hubkolbenmaschine gezeigt, in dem zwischen zwei Kurbelwangen 2, 3 ein im wesentlichen zylindrischer Hubzapfen 4 einstückig mit den Kurbelwangen ausgebildet ist. Auf dem Hubzapfen ist ein Pleuel 5 mit seinem großen Pleuelauge schwenkbar gelagert. Das in bekannter Weise in geteilter Ausführung gestaltete Pleuelauge 10 wird im wesentlichen durch einen einstückig mit der Pleuelstange 6 ausgebildeten, etwa halbkreisförmigen Pleuelfuß 7 und einen ebenfalls generell halbkreisförmigen Pleueldeckel oder Lagerdeckel 8 gebildet, der mit Schrauben 9 (siehe Fig. 5) am Pleuelfuß 7 befestigt ist. Das große Pleuelauge 10 hat eine im wesentlichen kreiszylindrische Innenfläche, die zur Aufnahme von aus Gründen der Übersichtlichkeit nicht gezeigten Lagerschalen (vgl. Fig. 7) dient, mit deren Hilfe ein Radial-Gleitlager zur drehbaren Lagerung des Pleuels auf dem Hubzapfen gebildet wird.

Der Hubzapfen 4 geht an seinen axialen Enden unmittelbar in die Kurbelwangen 2, 3 über, die als axiale Begrenzungen des zum Einbau des Pleuels vorgesehenen Raumes am Hubzapfen 4 dienen. Die Kurbelwangen haben einander zugewandte, zumindest im Bereich nahe des Hubzapfens 4 im wesentlichen planparallele Stirnflächen 11, 12, die vor allem der axialen Führung des auf dem Hubzapfen drehgelagerten Pleuels dienen. Das Pleuel hat im Bereich des großen Pleuelauges 10 im wesentlichen planparallele, axiale Stirnflächen 13, 14, deren Axialabstand (gemessen parallel zur Zylinderachse des Hubzapfens 4) einige Zehntel Millimeter kleiner ist als der Axialabstand der einander zugewandten Führungsflächen 11, 12 der Kurbelwangen. Dadurch wird zwischen den Führungsflächen 11, 12 der Kurbewangen und den axialen Stirnflächen 13, 14 am Pleuelkopf jeweils ein Schmierspalt mit typischen Breiten in der Größenordnung von einem Zehntelmillimeter oder wenigen Zehntel Millimetern gebildet.

Die einander gegenüberliegenden axialen Stirnflächen der Kurbelwangen des Pleuelauges und der Kurbelwelle berühren sich nicht. Vielmehr ist zur axialen Führung des Pleuels an der Kurbelwelle, also zur Festlegung der axialen Position des Pleuels auf dem Hubzapfen, an jeder axialen Seite des Pleuels ein Wälzlager 20, 21 vorgesehen, das bei der gezeigten Ausführungsform als reines Axiallager in Form eines Kugellagers ausgebildet ist und das einen Teil der Pleuellagerung bildet.

Am Beispiel des in Fig. 1 rechts gezeigten Wälzlagers 21, dessen dem Pleuel zugeordnete Elemente in Fig. 5 in schräger Draufsicht gezeigt sind, werden nun Aufbau und Funktion des Wälzlagers näher erläutert. Das Wälzlager 21 besitzt am großen Pleuelauge 10 im Bereich von dessen axialer Stirnfläche 14 eine ringförmige Anordnung von beispielsweise achtzehn Wälzkörpern 22 in Form von Stahlkugeln. Jede der Stahlkugeln sitzt drehbeweglich in einer eigenen, der Form der Stahlkugelform angepaßten Aufnahmeöffnung 23, die direkt im Stahlkörper des Pleuelkopfs im Bereich von dessen axialer Stirnfläche 14 vorgesehen ist. Die Tiefe der Wälzkörperaufnahme 23 ist so bemessen, daß ein eingelegter Wälzkörper mit einem Teil seines Umfangs aus der Aufnahmeöffnung herausragt, wobei typische Überstandshöhen zwischen der durch den Verlauf der Stirnfläche 14 definierten axialen Begrenzung des Pleuels und dem herausragenden Umfang des Wälzkörpers in der Größenordnung von ein bis zwei Zehntelmillimetern liegen kann. Die Aufnahmeöffnungen 23 werden in der Stirnfläche des Pleuels beispielsweise durch Bohren zunächst so eingebracht, daß der Wälzkörper durch die stirnseitige Öffnung der Aufnahmeöffnung 23 in diese einführbar ist. Danach wird durch Verstemmen des Randbereichs der Aufnahmeöffnung am Übergang zwischen Aufnahmeöffnung 23 und Stirnseite 14 das Material des Pleuels so weit plastisch verformt, daß der stirnseitige Öffnungsquerschnitt der Aufnahmeöffnung kleiner ist als der Durchmesser der Wälzkugel 22. Dadurch wird diese auf einfache Weise ohne zusätzliche Sicherungselemente gegen Herausfallen aus der Aufnahmeöffnung gesichert. Diese Integration einzelner Wälzkörper unmittelbar in das Material des Pleuels ist insbesondere im Hinblick auf die üblicherweise vorgesehene Teilbarkeit des großen Pleuelauges 10 (siehe Fig. 5) vorteilhaft.

Die den Wälzkörpern 22 zugeordnete Abrollfläche bzw. Laufbahn 25 ist im axial gegenüberliegenden Bereich der Kurbelwellenstirnfläche 12 ausgebildet. Diese ist vorzugsweise in dem die Laufbahn bildenden, ringförmigen Bereich durch geeignete Wärmebehandlung o. dgl. lokal gehärtet, um ein Eindrücken der punktförmig aufliegenden Wälzkugeln im Verlauf des Betriebes zu verhindern und einen dauerhaften reibungsarmen Rollkontakt zwischen den Wälzkörpern und der Kurbelwangen zu ermöglichen. Die in Fig. 2 durch Schraffur erkennbare lokale Härtung der Kurbelwangen im Bereich der Abrollflächen 25 kann beispielsweise unter Verwendung von Lasern oder durch Induktionshärten durchgeführt werden. Ggf. kann die Abrollfläche 25 noch über die übliche Rauhigkeit in diesen Bereich hinaus geglättet werden, um einen ruhigen Wälzkörperlauf sicherzustellen. Eine weitere Reduzierung der Reibung kann möglicherweise durch geeignete Beschichtung von Lagerlaufflächen, beispielsweise mit Polytetrafluorethylen oder vergleichbaren Beschichtungswerkstoffen erreicht werden. Ggf. kann auch durch Verwendung härterer Keramikwerkstoffe für Wälzkörper und/oder Abrollflächen eine Reibungsreduktion erreicht werden.

Dank der Wälzlager 20, 21 kann eine weitgehend spielfreie und reibungsarme Axiallagerung des Pleuels zwischen den Kurbelwangen 2, 3 erreicht werden. Dabei ermöglichen die über die zugeordneten Stirnflächen 13, 14 hinausragenden Wälzkörper, daß zwischen den einander gegenüberliegenden Stirnflächen von Pleuel und Kurbelwange ein relativ breiter Schmierspalt 15 von einigen Zehntel Millimetern Breite verbleibt, aus dem Öl seitlich schneller abfließen kann als aus herkömmlichen vergleichsweise schmalen Schmierspalten mit typischen Spaltbreiten von wenigen Hundertstel Millimetern.

Bei nicht gezeigten Ausführungsformen sind anstatt der kugelförmigen Wälzkörper weitgehend zylindrische Wälzkörper vorgesehen, die mit der zugeordneten Abrollfläche in einem Linienkontakt stehen. Hier können zur Aufnahme der gleichen Axialkräfte vergleichsweise weniger zylindrische Wälzkörper ausreichen, beispielsweise 3, 6, 9 oder 12 vorzugsweise gleichmäßig um den Umfang des Lagers verteilte Wälzzylinder.
Alternativ sind auch andere Wälzkörper möglich, z.B. ballig ausgebildete Rollen.

Dadurch, daß die Wälzlager 20, 21 als reine Axiallager ausgebildet sind, werden sie durch eventuell vorhandenes Radialspiel des Pleuels auf dem Hubzapfen in ihrer Funktion nicht nachteilig beeinflußt. Zur Aufnahme von Radialkräften dient ausschließlich die im gezeigten Beispiel als Gleitlagerung ausgeführte Lagerung zwischen Hubzapfen 4 und Pleuelkopf 10.

Die Wälzlager 20, 21 können durch den die Kurbelwelle im Betrieb umgebenden Ölnebel und/oder durch Öl geschmiert werden, das aus den im Bereich des Hubzapfens ausgebildeten Pleuelradiallager abfließt, das im allgemeinen über in der Kurbelwelle vorgesehene Ölkanäle mit Schmieröl versorgt wird (vgl. Fig. 7). Eine durch die Wälzlager und die vergrößerten Schmierspalte bedingte Erhöhung des Ölbedarfes ist nicht zu erwarten. Möglicherweise ist eine Verringerung des Ölbedarfes möglich, da aufgrund der verbesserten Reibungsverhältnisse und der großen Schmierspalte die Öltemperatur zumindest in diesem Bereich sinkt und damit weniger Öl zur Schmierung bzw. Kühlung erforderlich ist.

Anhand von Fig. 3 werden weitere vorteilhafte Gestaltungsmöglichkeiten erfindungsgemäßer Wälzlager erläutert. Bei dem Wälzlager 30 in Fig. 3 ist die der Kurbelwange 31 zugeordnete Abrollfläche 32 nicht direkt am Körper der Kurbelwange vorgesehen, sondern an einem gesonderten Lagerelement 33, das in eine entsprechende, im Querschnitt rechteckförmige, in Umfangsrichtung der Kurbelwange umlaufende Ringnut eingesetzt wird. Das Lagerelement 33, das für geteilte Pleuel aus zwei halbkreisförmigen Ringsegmenten bestehen kann, ist aus einem im Vergleich zum Material der Kurbelwange 31 härteren Material gefertigt, beispielsweise aus Hartmetall oder aus einem keramischen Werkstoff.

Im Bereich des die kugelförmigen Wälzkörper 34 direkt aufnehmenden Pleuelteils unterscheidet sich diese Ausführungsform von der oben beschriebenen dadurch, daß jeder der Wälzkörper durch eine in der Wälzkörperaufnahmeöffnung 35 angeordnete Druckfeder 36 in Axialrichtung federbelastet und dabei in Richtung auf die axial gegenüberliegende Abrollfläche 32 vorgespannt ist. Dadurch kann erreicht werden, daß die Wälzkörper 34 ständig mit einem gewissen Anpreßdruck an die gegenüberliegende, zugeordnete Abrollfläche 32 angepreßt werden, so daß ein ununterbrochener Berührungskontakt zwischen Wälzkörper und Abrollfläche sichergestellt ist. Wandert nun im Betrieb das Pleuel unter Ausnutzung seines Axialspieles geringfügig in Axialrichtung des Hubzapfens hin oder her, so können die Druckfedern 36 dafür sorgen, daß die Wälzkörper trotz variierender Breite des Schmierspaltes 37 immer in Berührungskontakt mit der gegenüberliegenden Abrollfläche stehen. Die Anordnung ist auch im Hinblick auf Dimensionsänderungen von Kurbelwelle und/oder Pleuel vorteilhaft, die sich durch Wärmeausdehnung im Betrieb ergeben können.

Bei der Ausführungsform eines Wälzlagers 40 gemäß Fig. 4 sind im Unterschied zu den vorgenannten Ausführungsformen die kugelförmigen Wälzkörper 41 nicht direkt in dem Material des Pleuels eingelassen, sondern werden durch einen gesonderten Wälzkörperträger 42 getragen, der in einen rechteckförmigen Einstich 43 am hubzapfenzugewandten Endbereich der axialen Stirnseite 44 des Pleuelkopfes 45 vorgesehen ist. Die Verwendung derartiger Wälzkörperträger oder Wälzkörperkäfige 42 bietet sich vor allem bei sogenannten gebauten Kurbelwellen an, wie sie beispielsweise bei größeren Hubkolbenmaschinen für Schiffe verwendet werden. In solchen Fällen kann ein in Umfangsrichtung geschlossener, ringförmiger Wälzlagerkäfig in eine Stirnseite eines Pleuels eingesetzt werden, bevor dieses in Axialrichtung auf den zugehörigen Hubzapfen geschoben wird. Ein Wälzkörperkäfig oder Wälzkörperträger muß jedoch nicht unbedingt ringförmig geschlossen sein, sondern er kann auch kreisabschnittsförmig ausgebildet sein. Beispielsweise kann ein Lager der in Fig. 5 erkennbaren Art auch dadurch geschaffen werden, daß zwei halbkreisförmige Wälzkörperkäfige verwendet und in geeigneter Weise am Pleuelfuß bzw. am Pleueldeckel befestigt werden, um eine insgesamt ringförmige Verteilung von Wälzkörpern zu bilden.

Bekanntlich kann es insbesondere bei Hubkolbenmaschinen mit einer hohen Anzahl von Zylindern zweckmäßig sein, mehrere Pleuel auf einen gemeinsamen Hubzapfen - oder auf zwei geringfügig gegeneinander parallel versetzten Hubzapfen - anzuordnen. Fig. 6 zeigt einen derartigen langen, zwischen zwei Kurbelwangen 50, 51 angeordneten Hubzapfen 53, auf dem zwei unabhängig voneinander drehbare Pleuel 53, 54 gelagert sind. Bei dieser Ausführungsform ist jeweils zwischen den Pleueln und der nächstliegenden Kurbelwange ein Wälzlager vorgesehen, das nach Art der bisher beschriebenen Wälzlager (gemäß Fig. 1 bis 5) ausgebildet sein kann. Insbesondere kann das rechts gezeigte Pleuel 54 ähnlich dem in Fig. 1 gezeigten Pleuel 5 Wälzkörper an beiden axialen Stirnflächen 55, 56 aufweisen. Eine Besonderheit liegt nun darin, daß auch zwischen den axial nebeneinander liegenden Pleueln 53, 54 ein als reines Axialkugellager ausgebildetes Wälzlager 56 vorgesehen ist. Hierbei sind die Wälzkörper 57 des Lagers im Bereich der Stirnseite 56 des Pleuels 54 ringförmig angeordnet. Die zugehörige Abrollfläche 58 befindet sich an der axial gegenüberliegenden Stirnseite 59 des anderen Pleuels 53 und wird durch die ebene Oberfläche einer ringförmigen gehärteten Platte 60 gebildet, die in Form und Material im wesentlichen identisch mit dem in Fig. 3 gezeigten Lagerelement 33 sein kann. Bei dieser Ausführungsform ist es also so, daß eine Abrollfläche 58 eines Wälzlagers nicht einer Kurbewange, sondern einem Pleuel zugeordnet ist. Wenn drei Pleuel auf einem gemeinsamen Hubzapfen sitzen, so kann eine ähnliche Gestaltung der Pleuel genutzt werden, um sowohl zwischen den Pleueln, als auch zwischen den Randpleueln und den benachbarten Kurbelwangen Wälzlager zu bilden. Insbesondere kann es so sein, daß ein Pleuel vom Typ des Pleuels 54 (mit Wälzkörpern an beiden axialen Stirnflächen) von zwei Pleueln nach Art des Pleuels 53 "eingerahmt" wird, wobei jeweils die dem mittleren Pleuel zugewandten axialen Stirnflächen an der äußeren Pleuel die Abrollflächen bilden. Mit nur zwei verschiedenen Pleueltypen beispielsweise nach Art der in Fig. 6 gezeigten Pleuel 53, 54 kann jede beliebige Anzahl von Pleuel auf einem gemeinsamen Hubzapfen auf erfindungsgemäße Weise axial geführt werden.

Anhand der Figuren 7 bis 9 werden vorteilhafte Ausführungsformen erfindungsgemäßer hydrodynamischer Axiallager zur axialen Führung eines Pleuels beschrieben. Fig. 7 zeigt hierzu einen axialen Ausschnitt einer Kurbelwelle mit einem an einem Hubzapfen 71 der Kurbelwelle schwenkbar gleitgelagerten Pleuel 72. Das Pleuel hat am gezeigten großen Pleuelkopf im wesentlichen ebene, zueinander parallele axiale Stirnseiten 73, 74 und trägt im Inneren eine Pleuellagerschale 75. Die Kurbelwelle hat im Bereich der den Hubzapfen 71 axial begrenzenden Kurbelwangen 76, 77, an deren dem Hubzapfen zugewandten Stirnseiten 78, 79 und im Übergangsbereich zwischen Hubzapfen und Kurbelwange Freistiche 80. An die Freistiche 80 schließen sich nach raidal außen in die Stirnseiten 78, 79 durch die Materialabtragung eingearbeitete Vertiefungen 81 an, die sich bei der gezeigten Ausführungsform bezogen auf die Zentralachse 82 des Hubzapfens spiralförmig nach radial außen erstrecken (vgl. rechtes oberes Kreissegment in Fig. 8). In Umfangsrichtung der Kurbelwange bzw. des Pleuels sind die Vertiefungen rampenartig ausgebildet, haben also in Umfangsrichtung eine mehr oder weniger kontinuierlich variierende axiale Tiefe, die bezogen auf die Drehrichtung 83 (Fig. 8 und 9) im eintrittseitigen Abschnitt tiefer sind als im austrittseitigen Abschnitt. Die Vertiefungen können typische axiale Maximaltiefen der Größenordnung einiger Zehntel Millimeter haben und bilden Unterbrechungen der ansonsten ebenen Stirnflächen 79.

Dabei sind diese Taschen bzw. Ausnehmungen aus fertigungstechnischen Gründen vorzugsweise in den Pleuelstirnseiten vorgesehen, es ist alternativ jedoch auch möglich diese in die Stirnflächen der Kurbelangen einzuarbeiten.

Der beschriebene Typ einer hydrodynamischen Lagerung bzw. Zentrierung 70 des Pleuels 72 auf dem Hubzapfen 71 kann wie folgt arbeiten. Bei Drehung der Kurbelwelle um die Kurbelwellenlängsachse wird Schmieröl aus dem Bereich des Hauptlagers 84 durch eine Diagonalbohrung 85 in den Bereich des Hubzapfens 71 fliehkraftunterstützt gefördert. Das Öl tritt dann in das zwischen der im wesentlichen zylindrischen Innenseite der Lagerschale 75 und der Außenseite des Hubzapfens gebildete Radial-Gleitlager für das Pleuel 72 ein und strömt von dort axial beidseitig zu den axialen Stirnseiten 73, 74 des Pleuels. Durch die Einstiche 80 hindurch gelangt das Öl fliehkraftunterstützt in die Vertiefungen 81. In deren Bereich erfährt der Schmierstoff zum einen aufgrund von Fliehkräften eine Radialbeschleunigung nach außen und zum anderen aufgrund der drehenden Relativbewegung zwischen Kurbelwange und Pleuel eine Bewegungskomponente in Umfangsrichtung. Diese bewirkt, daß aufgrund der rampenartigen Ausbildung der Vertiefungen (Fig. 9) der Schmierstoff in den axialen Spaltbereich 86 zwischen Kurbelwangenstirnseite und Pleuelstirnseite gequetscht wird und dort einen axialdruckstabilen Schmierfilm aufbaut, der einen Berührungskontakt zwischen dem Pleuel 72 und den Kurbelwangen 76, 77 zuverlässig verhindert.

Anhand von Fig. 8 werden einige vorteilhafte, alternative Formgebungen für die Vertiefungen angegeben, die sowohl in den axialen Stirnseiten von Kurbelwangen, als auch in axialen Stirnseiten von Pleulen eingearbeitet sein können. Anstatt der in Radialrichtung durch den Stirnseitenbereich 79 durchgehenden und in Umfangsrichtung gekrümmten, spiralförmigen Vertiefungen 81, die im rechten oberen Kreissegment von Fig. 8 gezeigt sind, können die Vertiefungen auch strahlförmig zur Drehachse 82 verlaufen. Derartige, in der Umfangsrichtung nicht gekrümmte Radialvertiefungen 87 sind im rechten unteren Kreissegment von Fig. 8 gezeigt. Es ist auch möglich, daß eine Vertiefung in Radialrichtung nicht durchgehend ist. Als Beispiel zeigt die linke Hälfte von Fig. 8 kreissegmentförmig gekrümmte Vertiefungen 88, die sich über eine gewisse Umfangslänge von beispielsweise einem Fünftel bis einem Zehntel des Umfanges der Stirnseite erstrecken und die sich, wie in Fig. 9 gezeigt, in Umfangsrichtung rampenartig verflachen. Im Bereich der tiefen Stellen, die bei der Drehung vorauseilt, führen optional vorgesehene Radialkanäle 89 von der dem Hubzapfen zugewandten Innenseite der Stirnfläche in die Vertiefung. Diese dienen einer besonders gezielten Ölzufuhr an die tiefste Stelle der Vertiefung.
Dabei kann die Querschnittsverringerung der Taschen wie in Figur 9 dargestellt linear erfolgen, es ist alternativ jedoch auch möglich, die Querschnittsverringerung diskontinuierlich auszubilden, z.B. indem der Taschengrundquerschnitt gekrümmt oder bogenförmig ausgebildet ist. Zudem ist neben einer Querschnittsverringerung der Taschen in Umfangsrichtung auch eine Querschnittsverringerung in radialer Richtung möglich.

Durch materialbatragende Bearbeitung der Kurbelwangenstirnseite und/oder der Pleuelstirnseiten zur Bildung derartiger oder bzgl. ihrer Funktion gleichwertiger Vertiefung lassen sich auf sehr einfache und kostengünstige Weise ohne die Anbringung beweglicher Teile zuverlässig nach Art hydrodynamischer Lager arbeitende Axialführungsmittel bzw. Axialzentrierungsmittel für Pleuel auf Hubzapfen realisieren.

## Patentansprüche

1. Pleuellagerung zur Lagerung mindestens eines Pleuels auf einem Hubzapfen einer Kurbelwelle einer Hubkolbenmaschine, wobei die Pleuellagerung Axialführungsmittel zur axialen Führung des Pleuels auf der Kurbelwelle aufweist, dadurch gekennzeichnet, daß die Axialführungsmittel mindestens ein im wesentlichen gleitreibungsfreies Axiallager (20, 21; 30; 40; 56; 70) aufweisen.

2. Pleuellagerung nach Anspruch 1, dadurch gekennzeichnet, daß die Axialführungsmittel als gleitreibungsfreies Axiallager mindestens ein Wälzlager (20, 21; 30; 40; 56) aufweisen.

3. Pleuellagerung nach Anspruch 1 oder 2, dadurch gekennzeichnet, daß im Bereich des Axiallagers zwischen axial benachbarten, gegeneinander verdrehbaren Elementen ein Schmierspalt (15) mit einer mittleren Breite von mehr als ca. 50 µm, insbesondere mit einer Breite zwischen ca. 100 µm und ca.200 µm gebildet ist.

4. Pleuellagerung nach Anspruch 2 oder 3, dadurch gekennzeichnet, daß das Wälzlager (20, 21; 30; 40; 56) als reines Axialwälzlager ausgebildet ist.

5. Pleuellagerung nach einem der vorhergehenden Ansprüche, dadurch gekennzeichnet, daß das Axiallager als ein Kugellager (20, 21; 30; 40; 56) oder ein Rollenlager ausgebildet ist.

6. Pleuellagerung nach einem der vorhergehenden Ansprüche, dadurch gekennzeichnet, daß ein Pleuel (5; 53, 54) ein großes Pleuelauge (10) mit axialen Stirnflächen (13, 14; 44; 55, 56, 59) aufweist und daß im Bereich des großen Pleuelauges mindestens einer der axialen Stirnflächen Wälzkörper (22; 34; 41; 57) eines Wälzlagers angeordnet sind, vorzugsweise in einer ringförmigen Anordnung.

7. Pleuellagerung nach einem der vorhergehenden Ansprüche, dadurch gekennzeichnet, daß das Axiallager eine zum Zusammenwirken mit Wälzkörpern eines Wälzlagers vorgesehene, vorzugsweise im wesentlichen ebene Abrollfläche (25; 32; 58) aufweist, die an einer axialen Stirnseite einer Kurbelwange (2, 3; 31; 50, 51) der Kurbelwelle oder an einem axial benachbarten Pleuel (53) vorgesehen ist.

8. Pleuellagerung nach Anspruch 7, dadurch gekennzeichnet, daß die Kurbelwange (3) und/oder das Pleuel im Bereich der Abrollfläche (25) lokal gehärtet, insbesondere induktionsgehärtet oder mittels Laser gehärtet ist.

9. Pleuellagerung nach Anspruch 7, dadurch gekennzeichnet, daß die Kurbelwange (31) und/oder das Pleuel (53) zur Bildung der Abrollfläche (32; 58) ein gesondertes Lagerelement (33; 60) aufweist, das aus einem harten oder gehärteten Werkstoff besteht, insbesondere aus Hartmetall oder Keramik, und an dem die Abrollfläche ausgebildet ist.

10. Pleuellagerung nach einem der Ansprüche 2 bis 7, dadurch gekennzeichnet, daß das Wälzlager Wälzkörper (22; 34; 57) aufweist, die direkt in einer im Bereich einer axialen Stirnfläche eines Pleuelauges oder einer Kurbelwellenwange vorgesehene Aufnahmeöffnung (23; 35) angeordnet sind.

11. Pleuellagerung nach einem der Ansprüche 2 bis 10, dadurch gekennzeichnet, daß das Wälzlager (30) in Axialrichtung federbelastet ist, wobei das Wälzlager vorzugsweise Wälzkörper (34) aufweist, die, insbesondere mittels einer zugeordneten Druckfeder (36), federbelastet sind.

12. Pleuellagerung nach einem der vorhergehenden Ansprüche, dadurch gekennzeichnet, daß die Axialführungsmittel als gleitreibungsfreies Axiallager mindestens ein hydrodynamisches Lager (70) aufweisen.

13. Pleuellagerung nach Anspruch 12, dadurch gekennzeichnet, daß mindestens eine axiale Stirnfläche eines Pleuels und/oder mindestens eine axiale Stirnfläche (79) einer Kurbelwange (76, 77) zur Bildung eines hydrodynamischen Axiallagers (70) durch Strukturierung der Stirnseite angepaßt ist, wobei vorzugsweise eine Stirnfläche eine oder mehrere Vertiefungen (81; 87; 88) zur Aufnahme und/oder Leitung von Schmierstoff aufweist.

14. Pleuellagerung nach Anspruch 13, dadurch gekennzeichnet, daß die Vertiefungen (87) bezogen auf die Drehachse (82) des Pleuels mindestens abschnittsweise strahlförmig verlaufen.

15. Pleuellagerung nach Anspruch 13 oder 14, dadurch gekennzeichnet, daß die Vertiefungen (81) bezogen auf die Drehachse des Pleuels derart spriralförmig verlaufen, daß sie in Umfangsrichtung der mit Vertiefungen versehenen Stirnfläche (79) gekrümmt sind.

16. Pleuellagerung nach einem der Ansprüche 13 bis 15, dadurch gekennzeichnet, daß die Vertiefungen (81; 87, 88) durch eine in Umfangsrichtung variierende axiale Tiefe nach Art einer Rampe ausgebildet sind, wobei die Rampe vorzugsweise derart ausgerichtet ist, daß die Vertiefung in einem Einleitungsbereich für Schmierstoff tiefer ist und sich zum einem Ausleitungsbereich hin verflacht.

17. Hubkolbenmaschine mit einer mindestens einen Hubzapfen (4; 52; 71) aufweisenden Kurbelwelle und mindestens einem an dem Hubzapfen mittels einer Pleuellagerung gelagerten Pleuel (5; 53, 54; 72), wobei die Pleuellagerung Axialführungsmittel zur axialen Führung des Pleuels an der Kurbelwelle aufweist, dadurch gekennzeichnet, daß die Axialführungsmittel mindestens ein im wesentlichen gleitreibungsfreies Axiallager (20, 21; 30; 40; 56; 70) aufweisen.

18. Hubkolbenmaschine nach Anspruch 17, dadurch gekennzeichnet, daß das Axiallager gemäß den Merkmalen des kennzeichnenden Teils von mindestens einem der Ansprüche 2 bis 14 ausgebildet ist.

19. Pleuel für eine Hubkolbenmaschine, bei dem das Pleuel im Bereich eines großen Pleuelauges (10) axiale Stirnflächen (13, 14; 44; 55, 56, 59) aufweist, dadurch gekennzeichnet, daß das Pleuel im Bereich mindestens einer seiner axialen Stirnflächen ein im wesentlichen gleitreibungsfreies Axiallager zur axialen Führung des Pleuels aufnimmt.

20. Pleuel nach Anspruch 19, dadurch gekennzeichnet, daß im Bereich mindestens einer der axialen Stirnflächen im Bereich des großen Pleuelauges, vorzugsweise in einer ringförmigen Anordnung, Wälzkörper (22; 34; 41; 57) eines Wälzlagers angeordnet sind und/oder daß im Bereich mindestens einer dieser axialen Stirnflächen eine vorzugsweise ringförmige Abrollfläche (58) für Wälzkörper eines Wälzlagers angeordnet ist und/oder daß im Bereich mindestens einer dieser axialen, vorzugsweise ebenen Stirnflächen Vertiefungen (81; 87, 88) eines hydrodynamischen Axiallagers vorgesehen sind.

21. Kurbelwelle mit mindestens einem Hubzapfen zum Tragen mindestens eines Pleuels und mit den Hubzapfen axial begrenzenden Kurbelwangen, die den Hubzapfen zugewandte axiale Stirnseiten aufweisen, dadurch gekennzeichnet, daß mindestens eine Stirnseite (78, 79) zur Bildung eines im wesentlichen gleitreibungsfreien Axiallagers zur axialen Führung des Pleuels ausgebildet ist.

22. Kurbelwelle nach Anspruch 21, dadurch gekennzeichnet, daß im Bereich mindestens einer der axialen Stirnflächen Wälzkörper eines Wälzlagers angeordnet sind, vorzugsweise in einer ringförmigen Anordnung, und/oder daß im Bereich mindestens einer der axialen Stirnflächen eine vorzugsweise ringförmige Abrollfläche (25; 32) für Wälzkörper eines Wälzlagers angeordnet ist und/oder daß im Bereich mindestens einer der axialen, vorzugsweise ebenen Stirnflächen (78, 79) Vertiefungen (81; 87, 88) eines hydrodynamischen Axiallagers vorgesehen sind.
